(19) Europäisches Patentamt
European Patent Office
Office européen des brevets

(11) **EP 2 857 438 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **13004763.2**

(22) Anmeldetag: **02.10.2013**

(51) Int Cl.:
*C08J 3/12* (2006.01)    *B01D 39/00* (2006.01)
*B01D 46/00* (2006.01)    *B01D 53/00* (2006.01)
*B01D 71/00* (2006.01)    *B29C 43/00* (2006.01)
*B29C 43/10* (2006.01)    *C08J 3/20* (2006.01)
*C08K 3/04* (2006.01)    *C08L 27/18* (2006.01)
*F16J 13/02* (2006.01)    *F16K 24/04* (2006.01)

(54) **Druckausgleichselement und Herstellungsverfahren dafür**

Pressure equalisation element and method for producing same

Elément d'équilibrage de pression et son procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.04.2015 Patentblatt 2015/15**

(73) Patentinhaber: **Berghof Fluoroplastic Technology GmbH**
**72800 Eningen (DE)**

(72) Erfinder:
• **Walter, Oliver**
**72829 Engstingen (DE)**
• **Bräkow, Peter**
**verstorben (DE)**
• **Henes, Michael**
**72127 Kusterdingen (DE)**
• **Nicoll, Jonas**
**72793 Pfullingen (DE)**

(74) Vertreter: **Forstmeyer, Dietmar et al**
**BOETERS & LIECK**
**Oberanger 32**
**80331 München (DE)**

(56) Entgegenhaltungen:
WO-A1-97/06206    WO-A2-2004/016341
US-A- 2 752 637    US-A1- 2004 175 571
US-A1- 2010 104 845    US-B1- 6 355 391

**Beschreibung**

Die vorliegende Erfindung betrifft ein Druckausgleichselement, umfassend eine Membran, sowie eine Membran aus einem entsprechenden Polymermaterial, sowie ein Verfahren zur Herstellung eines Druckausgleichselementes, ein Verfahren zur Herstellung einer Membran, sowie eine Verwendung einer aus einem Polymermaterial hergestellten Membran für ein Druckausgleichselement.

**Hintergrund der Erfindung**

Druckausgleichselemente für Gehäuse sind im Fachgebiet bekannt. Insbesondere elektrische und/oder elektronische Bauteile werden zum Schutz vor Umwelteinflüssen häufig in abgedichteten Gehäusen eingesetzt. Dabei ist die Möglichkeit eines Druckausgleichs vorteilhaft, um möglicherweise entstehende Druckgefälle zwischen Innen- und Außendruck des Gehäuses ohne weiteres ausgleichen zu können.

Besonders bei Anwendungen, die für den Außeneinsatz bestimmt sind und/oder bei mobilen Anwendungen, wie beispielsweise in Fahrzeugen, können erhebliche Druckschwankungen auftreten. Beispielsweise können Änderungen des Außendruckes durch wetterbedingte (barometrische) Druckänderungen oder durch Höhenänderungen mobiler Einheiten bedingt sein. Darüber hinaus können Druckänderungen auch durch Temperaturänderungen verursacht werden, beispielsweise extern durch Einflüsse, wie z.B. Sonneneinstrahlung, Tages- bzw. Jahreszeit, Abwärme von in der Nähe befindlichen Bauteilen, wie beispielsweise Motoren, Lampen und dergleichen, oder intern durch Erwärmung des geschützten Bauteils im Betrieb bzw. Abkühlung nach Außerbetriebnahme, wie z.B. dem Ein- und Ausschalten eines elektrischen und/oder elektronischen Bauteils, einer Lampe, usw., bei Bauteilen mit beweglichen Komponenten (z.B. Motoren, Reglern etc.) auch durch Reibungswärme o.ä., etc. Die durch derartige Phänomene bedingten Druckgefälle können so groß werden, dass sie bei einem Gehäuse ohne Möglichkeit eines Druckausgleichs die Abdichtung des Gehäuses so stark belasten können, dass das Gehäuse undicht wird und so das eingeschlossene elektrische und/oder elektronische Bauteil nicht mehr ausreichend vor Umwelteinflüssen geschützt wird.

Umwelteinflüsse, die besonders für elektrische und/oder elektronische Bauteile schädlich sind, umfassen Flüssigkeiten (z.B. Wasser) und Feststoffe, insbesondere kleinteilige Feststoffe (z.B. Staub, Schmutz, usw.). Für elektrische und/oder elektronische Bauteile ist daher ein Schutz vor Wasser (Nässe) und Staub (Schmutz) besonders wichtig.

Beispiele für zu schützende Bauteile aus der Automobilindustrie sind beispielsweise elektrische Motoren, wie z.B. Startermotoren, Wischermotoren, Servomotoren für die Verstellung von Fenstern, Spiegeln, Sitzen und dergleichen, Beleuchtungselemente, wie z.B. Scheinwerfer, Heckleuchten, Richtungsanzeiger, Innen- und Außenbeleuchtungen etc., Steuergeräte, z.B. für Motorsteuerung, Getriebe, Bremsen (ABS), Steuerung (ESP), und dergleichen, Sensoren, Regler, etc.

Je nach Anwendungsgebiet werden unterschiedliche Anforderungen an Druckausgleichselemente gestellt.

Beispiele für Anwendungen im Automobilbereich sind beispielsweise Steuergeräte für ABS (Antiblockiersystem für Bremsen), Steuergeräte für Abstandsradar, Steuergeräte für Totwinkelassistent, Reifendruckkontrolle, Scheinwerfer, und dergleichen.

Beispielsweise werden für Anwendungen im Automobilbereich ein Luftdurchsatz von 15 1/h•cm$^2$ @ $\Delta$p 70 mbar (1 psi) oder höher bei gleichzeitigem Wassereintrittsdruck von 0,6 bar oder höher (entspricht einer Wassersäule von 6 m oder höher) gefordert.

Alternativ werden für andere Anwendungen im Automobilbereich ein Luftdurchsatz von 16 Nl/h•cm$^2$ @ $\Delta$p 70 mbar oder höher bei gleichzeitigem Wassereintrittsdruck von 0,43 bar oder höher gefordert.

Im Stand der Technik werden entsprechend der Vorgaben Druckausgleichselemente eingesetzt, die einen wasser- und staubdichten Verschluss von Gehäuseöffnungen bei gleichzeitiger Gas-(Luft)-Durchlässigkeit gewähren. Dafür umfassen Druckausgleichselemente in der Regel spezielle Membranen, die einen Gasaustausch zwischen dem Äußeren und Inneren des Gehäuses erlauben, aber Wasser und Staubteilchen verläßlich zurückhalten.

Ein Druckausgleichselement umfasst als wesentliches Bauteil eine Membran, die gasdurchlässig, aber nicht wasserdurchlässig ist. Die Membran ist in der Regel in Form einer Folie ausgebildet. Diese Membranen bzw. Folien werden auch als "semipermeabel" bezeichnet.

Im Stand der Technik werden geeignete Membranen aus Kunststoffen wie beispielsweise Polypropylen (PP), Polyethylen (PE) oder Polytetrafluorethylen (PTFE) beschrieben. Bei Polytetrafluorethylen kann auf Grundlage des verwendeten Polymerisationsverfahrens zwischen S-PTFE (Suspension) und E-PTFE (Emulsion) unterschieden werden. Insbesondere werden poröse PTFE-Folien wegen ihrer gasdurchlässigen und wasserundurchlässigen (hydrophoben) Eigenschaften als besonders geeignet beschrieben.

Gegenwärtig verwendete Membranen nutzen die speziellen Eigenschaften von gerecktem Polytetrafluorethylen (expanded PTFE, auch als ePTFE abgekürzt), das durch geeignetes Recken (Expandieren) einer extrudierten und/oder kalandrierten Folie aus PTFE hergestellt wird. Dazu wird beispielsweise PTFE mit einem Gleitmittel versehen extrudiert und/oder kalandriert, um eine Folie zu bilden, die nachfolgend in Maschinenrichtung und/oder quer zur Maschinenrichtung gereckt wird, optional gefolgt von Verdichten. So erhaltenes ePTFE zeichnet sich durch eine spezielle Struktur aus, die durch Fibrillen, die über Knötchen miteinander verbunden sind, gekennzeichnet ist. Optional können ePTFE-Folien auch mit Füllstoffen beladen werden. Nachteilig ist bei derartigen Membranen aus ePTFE, dass ePTFE als Membran nur sehr dünn angewendet werden kann, weil dicke ePTFE-Membranen einen zu geringen Luftfluß haben. Dadurch haben übliche ePTFE-Membranen eine sehr niedrige mechanische Stabilität. Zur Stabilitätsverbesserung muss eine ePTFE-Membran auf einen Träger (beispielsweise aus Polyester (PET)) laminiert werden, was eine verminderte chemische und thermische Resistenz bewirkt.

Folien aus ePTFE werden beispielsweise in WO 90/10673 A1 (mit $TiO_2$ gefülltes Material), WO 96/28501 A1 und WO 97/06206 A1 beschrieben.

Folien (Membranen) und Druckausgleichselemente aus ePTFE sind beispielsweise unter dem Handelsnamen "GORE" von der Fa. W.L. Gore & Associates, Inc. erhältlich. Ein anderer Hersteller ist die "GE" General Electric Company.

In einer bekannten Ausführungsform besteht ein Druckausgleichselement aus einer geeigneten Folie (Membran), die direkt über einer Öffnung im Gehäuse angebracht wird, beispielsweise, indem die Folie mit einem geeigneten Klebstoff direkt über die Gehäuseöffnung geklebt wird. Derartige Folien werden auch klebstoffbeschichtet bereitgestellt, wobei die Klebstoffbeschichtung vorzugsweise einen Haftklebstoff umfasst ("selbstklebende Druckausgleichselemente"). Alternativ kann die Membran auch durch geeignete Schweißtechniken über der Gehäuseöffnung angebracht werden, beispielsweise durch thermisches oder Ultraschallschweissen.

Eine andere bekannte Ausführungsform eines Druckausgleichselements umfasst eine Folie (Membran), die in einem geeigneten Gehäuse angebracht ist, wobei das Gehäuse des Druckausgleichselements dann in eine Gehäuseöffnung eingesetzt wird. Es sind Druckausgleichselemente bekannt, die in eine Gehäuseöffnung eingeschraubt werden oder in der Gehäuseöffnung durch eine Schnappverbindung gesichert werden. Alternativ kann ein Druckausgleichselement auch in eine Gehäuseöffnung mit einem geeigneten Klebstoff eingeklebt werden.

Beispiele solcher Druckausgleichselemente werden beispielsweise in den Patentschriften DE 10 2006 053 113 A1 beschrieben.

Membranen für Belüftungselemente werden beispielsweise auch in EP 0 377 067 A1, WO 96/16288 A1 und EP 2 404 652 A1 beschrieben. Weiterer Stand der Technik ist in US 2,752,637, US 6,355,391, US 2010/0104845, US 2004/0175571 und WO 2004/016341 beschrieben.

Entsprechend ist es eine Aufgabe der vorliegenden Erfindung, eine Membran aus einem Polymermaterial sowie ein Druckausgleichselement, das eine derartige Membran umfasst, bereitzustellen. Eine weitere Aufgabe der Erfindung ist es, ein Verfahren zur Herstellung einer Membran bereitzustellen.

## Kurze Beschreibung der Erfindung

Die Aufgabe der Erfindung wird gelöst durch die Bereitstellung einer Membran, die ein Polymermaterials umfasst, das Polytetrafluorethylen und Rußpartikel mit einer Primärteilchengröße von 5 bis 25 nm und einer BET-Oberfläche von 200 bis 250 $m^2$/g umfasst.

Es wurde überraschend gefunden, dass das Polymermaterial zu Membranen verarbeitet werden kann, die durch einen sehr hohen Luftfluss ausgezeichnet sind, und gleichzeitig auch eine hohe Wasserundurchlässigkeit aufweisen, so dass sie für die Herstellung von Druckausgleichselementen besonders gut geeignet sind. Insbesondere sind Membranen aus dem Polymermaterial dadurch ausgezeichnet, dass
sie im Vergleich mit bekannten Membranen einen deutlich höheren Luftfluss bei vergleichbarer Wasserundurchlässigkeit (Wassereintrittsdruck) und somit eine besonders vorteilhafte Kombination dieser für die Anwendung wichtigen Eigenschaften zeigen.

Bevorzugt umfasst das Polymermaterial Polytetrafluorethylen, das gekennzeichnet ist durch einen oder mehrere der folgenden Parameter:

- eine Schüttdichte (beispielsweise nach ASTM 4894, DIN ISO 697:1984-01 oder DIN EN ISO 60 bestimmt) von 350 bis 400 g/L, vorzugsweise von 370 bis 390 g/L, und insbesondere von 380 g/L;
- ein mittleres Molgewicht von $1 \cdot 10^7$ bis $1 \cdot 10^9$ g/mol, vorzugsweise von $0,5 \cdot 10^8$ bis $0,5 \cdot 10^9$ g/mol, und insbesondere von etwa $10^8$ g/mol;
- eine durchschnittliche Partikelgröße $d_{50}$ (beispielsweise nach ASTM 4894 bestimmt) von 10 bis 30 $\mu$m, vorzugsweise von 15 bis 25 $\mu$m, und insbesondere von 20 $\mu$m;
- einen ersten Schmelzpunkt (beispielsweise nach ASTM 4894 bestimmt) von 340 bis 350°C, vorzugsweise von 340 bis 345°C, und insbesondere von 342°C; und/oder nachfolgende Schmelzpunkte (beispielsweise nach ASTM 4894 bestimmt) von 320 bis 330°C, vorzugsweise von 325 bis 330°C, und insbesondere von 327°C.

Das mittlere Molgewicht von löslichen Polymeren kann beispielsweise mit Hilfe der Gelpermeationschromatographie (GPC) bestimmt werden.

Bevorzugt umfasst das Polymermaterial Rußpartikel, die weiter gekennzeichnet sind durch einen oder mehrere der folgenden Parameter:

- eine Primärteilchengröße (beispielsweise mit einem Zeiss TG23 Analyzer bestimmt) von 5 bis 25 nm, vorzugsweise von 10 bis 20 nm, und insbesondere von 16 nm;
- eine BET-Oberfläche (beispielsweise nach ASTM D6556 oder ISO 4652 bestimmt) von 200 bis 250 m²/g, vorzugsweise von 220 bis 230 m²/g, und insbesondere von 225 m²/g;
- einen Gehalt an flüchtigen Bestandteilen gemäß DIN 53552 (950°C) von weniger als 2%, vorzugsweise von 0,5 bis 1,8%, und insbesondere von 1,2%;
- einen Gehalt an extrahierbaren Bestandteilen (Toluol-Extrakt, 8 h) von 0,5% oder weniger, vorzugsweise von 0,3% oder weniger, und insbesondere von 0,1% oder weniger;
- einen basischen pH-Wert (z.B. nach ISO 787-9 oder ASTM D 1512 bestimmt), vorzugsweise von 8 oder mehr, und insbesondere von 9;
- eine Tint Strength IRB = 100% (z.B. nach ASTM D 3265 oder ISO 5435 bestimmt) von 125 bis 145%, vorzugsweise von 129 bis 143%, und insbesondere von 136%;
- OAN (z.B. nach ASTM D 2414 oder ISO 4656 bestimmt) von 95 bis 115 ml/100g, vorzugsweise von 98 bis 112 ml/100g, und insbesondere von 105 ml/100g; und/oder
  eine Schwarzzahl My, am Pulverruß bestimmt (z.B. nach DIN 55979 bestimmt), von 250 bis 280, vorzugsweise von 260 bis 270, und insbesondere von 267.

Bevorzugt umfasst das Polymermaterial 90 bis 99% Polytetrafluorethylen und 1 bis 10% Rußpartikel.

Bevorzugt ist das Polymermaterial porös.

Besonders bevorzugt weist ein poröses Polymermaterial Poren mit einer Porengröße von 1 bis 25 $\mu$m auf, bevorzugt von 2 bis 10 $\mu$m, und besonders bevorzugt von 3 bis 5 $\mu$m.

Die Porosität des Polymermaterials kann beispielsweise bestimmt werden, indem die Dichte des porösen Körpers bestimmt und das Verhältnis zu einem gleich großen Körper aus massiven PTFE gebildet wird. Die Porosität wird beispielsweise mittels folgender Gleichung berechnet:

$$\text{Porosität [in \%]} = (1 - (d_{Probe}/d_0)) * 100\%$$

$$\text{mit } d_{Probe} = \text{Dichte der Probe und } d_0 = \text{Dichte von massiven PTFE,}$$

$$\text{jeweils in g/cm}^3.$$

Weiter bevorzugt weist das poröse Polymermaterial eine Porosität von 30 bis 60% auf, besonders bevorzugt von 35 bis 42%.

Bevorzugt ist das Polymermaterial durch ein Verfahren erhältlich, das die folgenden Schritte umfasst:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers; und
(e) Sintern des Presskörpers bei 360 bis 380°C für 4 bis 10 Stunden.

Besonders bevorzugt wird der Schritt des Mischens (a) solange durchgeführt, bis eine innige Mischung (eine homogene Mischung) aus PTFE und Rußpartikeln erhalten wird.

Zur Bestimmung der Partikelgröße des zermahlenen Sinterproduktes in Schritt (c) können beispielsweise die Werte $d_{10}$ (maximale Größe von 10% der Partikel), $d_{50}$ (maximale Größe von 50% der Partikel) und/oder $d_{90}$ (maximale Größe von 10% der Partikel) verwendet werden, die beispielsweise gemäß ASTM 4894 bestimmt werden.

In einer exemplarischen Messung wurden beispielsweise die folgenden Werte bestimmt: $d_{10}$ = 26 $\mu$m (d.h. 10% der Partikel sind kleiner als 26 $\mu$m), $d_{50}$ = 46 $\mu$m (d.h. 50% der Partikel sind kleiner als 46 $\mu$m), und $d_{90}$ = 134 $\mu$m (d.h. 90% der Partikel sind kleiner als 134 $\mu$m).

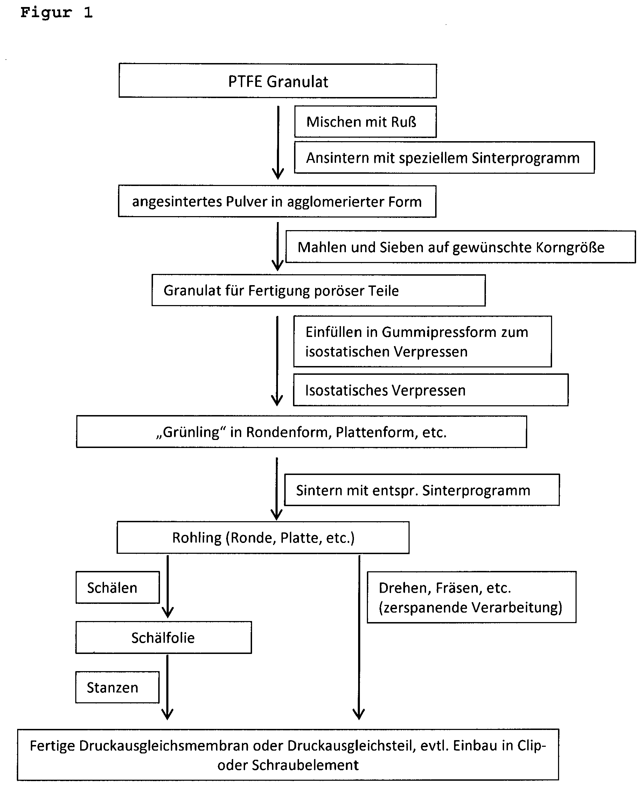

Der Schritt des isostatischen Formpressens (d) wird bevorzugt bei Raumtemperatur in Wasser durchgeführt. Dazu wird der zu pressende Rohling wasserdicht in einem Sack aus einem geeigneten Material verpackt (beispielsweise in einem Gummisack) und in einen mit Wasser gefüllten Druckbehälter gegeben. Der Druckbehälter (Recipient) wird verschlossen und der Druck im Inneren des Behälters bis auf die gewünschte Höhe gebracht. In Abhängigkeit von der gewünschten Materialdichte kann der Druck in einem Bereich von 10 bis 500 bar eingestellt werden, bevorzugt von 200 bis 400 bar. Das isostatische Formpressen wird schematisch in Figur 1 gezeigt. Dadurch wird der Rohling gleichmäßig von allen Seiten gepresst und es wird ein sehr homogenes Material erhalten.

Der Sinterschritt (e) des Presskörpers umfasst vorzugsweise die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e6) Abkühlen von 335°C auf 300°C in 3 Stunden, und
(e6) Abkühlen von 300°C auf Raumtemperatur in 5 Stunden.

Eine erfindungsgemäße Membran umfasst bevorzugt ein oben beschriebenes Polymermaterial.

Bevorzugt umfasst eine erfindungsgemäße Membran eine Folie mit einer Dicke von 0,1 bis 5,0 mm.

Bevorzugt weist die erfindungsgemäße Membran einen Luftfluss von 15 bis 150 Nl/h•cm$^2$ (Normliter pro Stunde) und ein Wasserrückhaltevermögen von mindestens 0,2 bar auf.

Es wurde überraschend gefunden, dass das erfindungsgemäß verwendete Material im Gegensatz zu einem reinen PTFE-Material bei vergleichbarem Wassereintrittsdruck einen viel höheren Luftfluss zeigt. Insbesondere wurde gefunden, dass das erfindungsgemäß verwendete Material bei einem vergleichbaren Luftfluss einen viel höheren Wassereintrittsdruck als reines PTFE-Material aufweist.

Bevorzugt ist die erfindungsgemäße Membran durch ein Verfahren erhältlich, das die folgenden Schritte umfasst:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 μm oder weniger;
(d) Isostatisches Formpressen des gemahlenen Pulvers;
(e) Sintern des Presskörpers bei 360 bis 380°C für 4 bis 10 Stunden; und
(f) Mechanische Fertigbearbeitung.

Bevorzugt wird der Sinterschritt (b) bei 340°C für 120 Minuten durchgeführt.

Bevorzugt wird der Sinterschritt (e) bei 365°C für 5 Stunden durchgeführt.

Bevorzugt umfasst der Sinterschritt (e) des Presskörpers die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e6) Abkühlen von 335°C auf 300°C in 3 Stunden, und
(e6) Abkühlen von 300°C auf Raumtemperatur in 5 Stunden.

Bevorzugt umfasst der Schritt der mechanischen Fertigbearbeitung (f) ein Abschälen einer Folie mit einer Dicke von 0,1 bis 5,0 mm von dem gesinterten Presskörper.

Weiterhin stellt die vorliegende Erfindung ein Druckausgleichselement bereit, das eine erfindungsgemäße Membran umfasst.

Besonders bevorzugt ist ein Druckausgleichselement, das ein Gehäuse umfasst, das eine erfindungsgemäße Membran aufnimmt.

Ein Verfahren zur Herstellung eines Polymermaterials, das Polytetrafluorethylen und Ruß umfasst, umfasst die folgenden Schritte:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 μm oder weniger;
(d) Isostatisches Formpressen des gemahlenen Pulvers;
(e) Sintern des Presskörpers bei 360 bis 380°C für 4 bis 10 Stunden.

Bevorzugt wird der Sinterschritt (b) bei 340°C für 120 Minuten durchgeführt. Bevorzugt wird der Sinterschritt (e) bei 365°C für 5 Stunden durchgeführt.

Bevorzugt umfasst der Sinterschritt (e) des Presskörpers die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e6) Abkühlen von 335°C auf 300°C in 3 Stunden, und
(e6) Abkühlen von 300°C auf Raumtemperatur in 5 Stunden.

In einem weiteren Aspekt stellt die vorliegende Erfindung ein Verfahren zur Herstellung einer Membran bereit, wobei das Herstellungsverfahren die folgenden Schritte umfasst:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 μm oder weniger;
(d) Isostatisches Formpressen des gemahlenen Pulvers;
(e) Sintern des Presskörpers bei 360 bis 380°C für 4 bis 10 Stunden; und
(f) Mechanische Fertigbearbeitung.

Bevorzugt wird der Sinterschritt (b) bei 340°C für 120 Minuten durchgeführt.
Bevorzugt wird der Sinterschritt (e) bei 365°C für 5 Stunden durchgeführt.
Bevorzugt umfasst der Sinterschritt (e) des Presskörpers dabei die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e6) Abkühlen von 335°C auf 300°C in 3 Stunden, und
(e6) Abkühlen von 300°C auf Raumtemperatur in 5 Stunden.

In einem weiteren Aspekt stellt die vorliegende Erfindung die Verwendung einer erfindungsgemäßen Membran als wesentlichen Bestandteil eines Druckausgleichselements bereit.

**Kurze Beschreibung der Figuren**

Figur 1 zeigt eine schematische Darstellung des isostatischen Pressens.

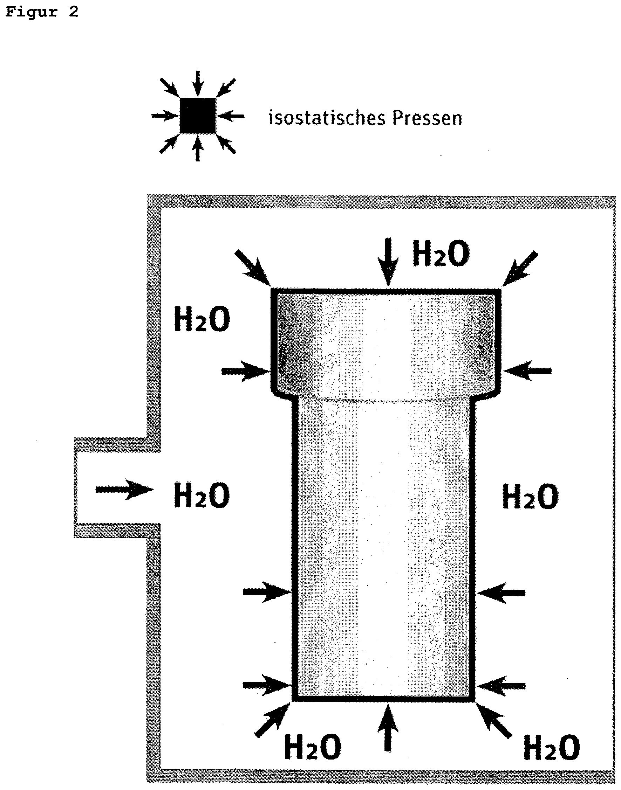

Figur 2 zeigt einen Ablaufplan (Fließschema) des erfindungsgemäßen Herstellungsverfahrens.

**Detaillierte Beschreibung der Erfindung**

Die vorliegende Erfindung stellt eine Membran bereit, die ein Polymermaterial umfasst, das Polytetrafluorethylen und Rußpartikel mit einer Primärteilchengröße von 5 bis 25 nm und einer BET-Oberfläche von 200 bis 250 m²/g umfasst.

Das Polymermaterial kann vorteilhaft zu Membranen verarbeitet werden, die durch einen sehr hohen Luftfluss ausgezeichnet sind, und gleichzeitig auch eine hohe

Wasserundurchlässigkeit aufweisen. Damit sind die Membranen für die Herstellung von Druckausgleichselementen besonders gut geeignet.

Für die Erfindung geeignet ist dabei jedes Polytetrafluorethylen. Bevorzugt ist das Polytetrafluorethylen eine nicht rieselfähige Type. Bevorzugt ist das

Polytetrafluorethylen virginales Polytetrafluorethylen, d.h. ein Polytetrafluorethylen ohne Zusatzstoffe oder Porenbildner. Bevorzugt ist das Polytetrafluorethylen ein S-Polymerisat (S-PTFE). S-PTFE wird im Gegensatz zu dem aus Emulsion gewonnenen E-PTFE aus Suspension gewonnen. Bei üblicher Herstellung wird S-PTFE in Form eines Granulats mit einer Korngröße von etwa 1 bis 3 mm erhalten, während E-PTFE bei üblicher Herstellung in Form eines viel feineren Granulats mit einer Korngröße von etwa 400 bis 600 $\mu$m erhalten wird. Eine geschälte Folie aus S-PTFE ist bei gleicher Dicke mechanisch stabiler als eine extrudierte Folie aus E-PTFE.

Bevorzugt ist das Polytetrafluorethylen durch einen oder mehrere der folgenden Parameter gekennzeichnet:

- eine Schüttdichte (beispielsweise nach ASTM 4894, DIN ISO 697:1984-01 oder DIN EN ISO 60 bestimmt) von 350 bis 400 g/L, vorzugsweise von 370 bis 390 g/L, und insbesondere von 380 g/L;
- ein mittleres Molgewicht von $1 \cdot 10^7$ bis $1 \cdot 10^9$ g/mol, vorzugsweise von $0,5 \cdot 10^8$ bis $0,5 \cdot 10^9$ g/mol, und insbesondere von etwa $10^8$ g/mol;
- eine durchschnittliche Partikelgröße $d_{50}$ (beispielsweise nach ASTM 4894 bestimmt) von 10 bis 30 $\mu$m, vorzugsweise von 15 bis 25 $\mu$m, und insbesondere von 20 $\mu$m;
- einen ersten Schmelzpunkt (beispielsweise nach ASTM 4894 bestimmt) von 340 bis 350°C, vorzugsweise von 340 bis 345°C, und insbesondere von 342°C; und/oder nachfolgende Schmelzpunkte (beispielsweise nach ASTM 4894 bestimmt) von 320 bis 330°C, vorzugsweise von 325 bis 330°C, und insbesondere von 327°C.

Das mittlere Molgewicht von löslichen Polymeren kann beispielsweise mit Hilfe der Gelpermeationschromatographie (GPC) bestimmt werden.

Bevorzugt wird das Polytetrafluorethylen in Form eines nicht frei fließenden PTFE-Pulvers (NFF, Non Free Flow, d.h. nicht rieselfähig bzw. "klumpig") mit einer mittleren Partikelgröße von 10 bis 30 $\mu$m verwendet, weiter bevorzugt von 15 bis 25 $\mu$m, und besonders bevorzugt mit einer mittleren Partikelgröße von 20 $\mu$m.

Die mittlere Partikelgröße des Polytetrafluorethylen kann beispielsweise durch Siebanalyse bestimmt werden.

Besonders bevorzugt weist das Polytetrafluorethylen die folgenden nach ASTM D 4894 bestimmbaren Eigenschaften auf:

| | |
|---|---|
| Schüttdichte (Bulk Density): | 380 g/L |
| Mittlere Teilchengröße (d50): | 20 $\mu$m |
| Mold Shrinkage (Max.): | 4% |
| Std. Specific Gravity (SSG): | 2,15-2,18 |
| Melting Point Initial: | 342°C |
| Melting Point Second: | 327°C |
| Zugfestigkeit: | 30 MPa |
| Elongation: | 350% |

Für die Erfindung geeignetes Polytetrafluorethylen kann beispielsweise unter dem Handelsnamen "INOFLON 640" von der Fa. Gujarat Fluorochemicals Limited (GFL), Noida, Indien bezogen werden. Auch geeignet ist G163 von Fluon/AGC (Asahi Glas Company).

Besonders für die Erfindung geeignete Rußpartikel sind Partikel aus technischem Industrieruß (carbon black).

Die Primärteilchengröße der Rußpartikel kann beispielswise mit einem Zeiss TGZ3 Analyzer zur Analyse von Latex-Emulsionen gemessen werden.

Die Primärteilchengröße der Rußpartikel beträgt von 5 bis 25 nm, weiter bevorzugt von 10 bis 20 nm, und besonders bevorzugt 16 nm. Es wurde gefunden, dass eine Verwendung von Rußpartikeln mit einer Primärteilchengröße von mehr als 25 nm in einer Verschlechterung der Werte für Luftdurchlass und Wassereintrittsdruck resultieren.

Die BET-Oberfläche der Rußpartikel kann beispielsweise gemäß ASTM D6556 bzw. ISO 4652 (z.B. mit Stick-

stoff, N$_2$) gemessen werden.

Die Rußpartikel weisen eine BET-Oberfläche von 200 bis 250 m$^2$/g auf, weiter bevorzugt von 220 bis 230 m$^2$/g, und besonders bevorzugt von 225 m$^2$/g.

Besonders bevorzugt weisen die Rußpartikel die folgenden Parameter auf:

Flüchtige Bestandteile (950°C): 1,2%
Extrahierbare Bestandteile (Toluol-Extrakt, 8h): $\leq$ 0,10%
pH-Wert: 9,0 (ISO 787-9)

```
Tint Strength IRB = 100%: 136,0% (129,0% - 143,0%) (ASTM D 3265)
```

Schwarzzahl My, am Pulverruß bestimmt: 261,0 (DIN 55979)
OAN: 105,0 (98,0 - 112,0) ml/100 g (ASTM D 2414)
Siebrückstand 45 $\mu$m Mocker: $\leq$ 75 ppm (ISO 787-18)

Für die Erfindung geeignete Rußpartikel können beispielsweise unter dem Handelsnamen "Printex 80" von der Fa. Orion Engineered Carbons (ehemals EVONIK) bezogen werden.

Bevorzugt umfasst das Polymermaterial Polytetrafluorethylen, das gekennzeichnet ist durch einen oder mehrere der folgenden Parameter:

- eine Schüttdichte (beispielsweise nach ASTM 4894, DIN ISO 697:1984-01 oder DIN EN ISO 60 bestimmt) von 350 bis 400 g/L, vorzugsweise von 370 bis 390 g/L, und insbesondere von 380 g/L;
- ein mittleres Molgewicht von 1•10$^7$ bis 1•10$^9$ g/mol, vorzugsweise von 0,5•10$^8$ bis 0,5•10$^9$ g/mol, und insbesondere von etwa 10$^8$ g/mol;
- eine durchschnittliche Partikelgröße d$_{50}$ (beispielsweise nach ASTM 4894 bestimmt) von 10 bis 30 $\mu$m, vorzugsweise von 15 bis 25 $\mu$m, und insbesondere von 20 $\mu$m;
- einen ersten Schmelzpunkt (beispielsweise nach ASTM 4894 bestimmt) von 340 bis 350°C, vorzugsweise von 340 bis 345°C, und insbesondere von 342°C; und/oder
- nachfolgende Schmelzpunkte (beispielsweise nach ASTM 4894 bestimmt) von 320 bis 330°C, vorzugsweise von 325 bis 330°C, und insbesondere von 327°C.

Bevorzugt umfasst das Polymermaterial Rußpartikel, die weiter gekennzeichnet sind durch einen oder mehrere der folgenden Parameter:

- eine Primärteilchengröße (beispielsweise mit einem Zeiss TG23 Analyzer bestimmt) von 5 bis 25 nm, vorzugsweise von 10 bis 20 nm, und insbesondere von 16 nm;
- eine BET-Oberfläche (beispielsweise nach ASTM D 6556 bzw. ISO 4652 bestimmt) von 200 bis 250 m$^2$/g, vorzugsweise von 220 bis 230 m$^2$/g, und insbesondere von 225 m$^2$/g;
- einen Gehalt an flüchtigen Bestandteilen gemäß DIN 53552 (950°C) von weniger als 2%, vorzugsweise von 0,5 bis 1,8%, und insbesondere von 1,2%;
- einen Gehalt an extrahierbaren Bestandteilen (Toluol-Extrakt, 8 h) von 0,5% oder weniger, vorzugsweise von 0,3% oder weniger, und insbesondere von 0,1% oder weniger;
- einen basischen pH-Wert (z.B. nach ISO 787-9 oder ASTM D 1512 bestimmt), vorzugsweise von 8 oder mehr, und insbesondere von 9;
- eine Tint Strength IRB = 100% (z.B. nach ASTM D 3265 oder ISO 5435 bestimmt) von 125 bis 145%, vorzugsweise von 129 bis 143%, und insbesondere von 136%;
- OAN (z.B. nach ASTM D 2414 oder ISO 4656 bestimmt) von 95 bis 115 ml/100g, vorzugsweise von 98 bis 112 ml/100g, und insbesondere von 105 ml/100g; und/oder
- eine Schwarzzahl My, am Pulverruß bestimmt (z.B. nach DIN 55979 bestimmt), von 250 bis 280, vorzugsweise von 260 bis 270, und insbesondere von 267.

Bevorzugt umfasst das Polymermaterial 90 bis 99% Polytetrafluorethylen, weiter bevorzugt 95 bis 98%, und besonders bevorzugt 97% Polytetrafluorethylen. Bevorzugt umfasst das Polymermaterial 1 bis 10% Rußpartikel, weiter bevorzugt 2 bis 5%, und besonders bevorzugt 3% Rußpartikel. Es wurde gefunden, dass eine Zugabe von größeren Mengen Ruß die mechanische Stabilität verschlechtert.

In einer besonders bevorzugten Ausführungsform besteht das Polymermaterial aus 97% PTFE und 3% Ruß.

Bevorzugt ist das Polymermaterial porös. Besonders bevorzugt weist ein poröses Polymermaterial Poren mit einer Porengröße von 1 bis 25 $\mu$m auf, bevorzugt von 2 bis 10 $\mu$m, und besonders bevorzugt von 3 bis 5 $\mu$m. Besonders bevorzugt weist ein poröses Polymermaterial verbundene und/oder durchgehende Poren auf.

Die Porengröße kann beispielsweise gemäß DIN ISO 4003 oder durch Quecksilberintrusion (z.B. gemäß DIN 66133) gemessen werden.

Weiter bevorzugt weist das poröse Polymermaterial eine Porosität von 30 bis 60% auf, besonders bevorzugt von 35 bis 42%.

Als Porosität wird das Verhältnis der Dichte des porösen Materials zu der Dichte eines nicht porösen Stoffes (Materials) bezeichnet.

Die Porosität wird mittels folgender Gleichung berechnet:

$$\texttt{Porosität [in \%]} = (1 - (d_{Probe}/d_0)) * 100\%$$

mit $d_{Probe}$ = Dichte der Probe und $d_0$ = Dichte von massiven PTFE, jeweils in g/cm$^3$.

Dabei wird näherungsweise die Dichte von reinem PTFE ($D_{PTFE}$ = 2,17 g/cm$^3$) eingesetzt und somit vernachlässigt, dass die tatsächliche Dichte der Mischung ($D_{Mischung}$) je nach Mischverhältnis variiert. In der Regel beträgt die Dichte der Mischung etwa 2,13 g/cm$^3$.

Es wurde gefunden, dass die Porengröße einen Einfluss auf Luftfluss und Wassereintrittsdruck zeigt. Je größer die Poren sind, desto höher ist der Luftfluss und desto geringer ist der Wassereintrittsdruck. Ein optimaler Bereich ist dann erreicht, wenn der Wassereintrittsdruck und der Luftdurchsatz über der jeweilig gewünschten Spezifikation liegen, wie beispielsweise ein Wassereintrittsdruck von größer als 0,6 bar und ein Luftdurchsatz von mehr als 15 Nl/h•cm$^2$•70 mbar.

Bevorzugt ist das Polymermaterial durch ein Verfahren erhältlich, das die folgenden Schritte umfasst:

(a) Mischen von Polytetrafluorethylen und Rußpartikeln, wobei Polytetrafluorethylen und Rußpartikel wie in den vorherigen Ansprüchen charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers; und
(e) Sintern des Presskörpers bei 360 bis 380°C für 4 bis 10 Stunden.

Bevorzugt wird der Sinterschritt (b) bei 340°C für 120 Minuten durchgeführt.
Bevorzugt wird der Sinterschritt (e) bei 365°C für 5 Stunden durchgeführt.

Dabei wird der Mischschritt (a) vorzugsweise so durchgeführt, dass eine homogene (bzw. innige) Durchmischung des Produktes erreicht wird. Als homogene bzw. innige Mischung wird eine Mischung bezeichnet, die bei optischer Betrachtung eine gleichmäßige Färbung zeigt, d.h. keine Flecken oder "Nester" mehr sichtbar sind, was einer bestmöglichen Durchmischung entspricht.

Vorzugsweise wird der Mischschritt (a) unter Verwendung eines Homogenisators durchgeführt. Geeignete Homogenisatoren sind beispielsweise Mühlen, wie Retsch-Labormühlen, die mit einer hohen Drehzahl des Schlagrotors (beispielsweise 18000 U/min) unter Einsatz eines groben Siebes als Homogenisator fungieren können. Andere geeignete Homogenisatoren sind die im Fachgebiet bekannten "Tornados" oder Schlagrotormühlen, vorzugsweise mit einem Siebeinsatz von 0,8 mm.

Der Sinterschritt (b) der Mischung umfasst vorzugsweise die folgenden Schritte:

(b1) Aufheizen von Raumtemperatur auf 340°C in 1 Stunde,
(b2) Halten bei 340°C für 2 Stunden, und
(b3) Abkühlen auf Raumtemperatur.

Es wurde gefunden, dass der Vorsinterschritt (b) bewirkt, dass das Endprodukt überhaupt porös wird. Wird dagegen ein nicht vorgesintertes Material verwendet, ist das Endprodukt nicht porös.

Somit reduziert das Vorsintern die Kristallinität des Materials. Es wurde weiter gefunden, dass diese Veränderung irreversibel ist. Vorgesintertes virginales PTFE lässt sich nicht mehr zu virginalen bzw. massivem PTFE verpressen und sintern, sondern bleibt porös. Mit Kolbenextrusion (RAM-Extrusion) ist es möglich, wieder ein massives Material zu erhalten, ein sogenanntes "Repro-PTFE".

Der Mahlschritt (c) des Sinterproduktes kann mit jeder geeigneten Mahl- oder Zerkleinerungsvorrichtung durchgeführt werden, beispielsweise mittels einer Ultrazentrifugal-Mühle (z.B. einer Retsch-Mühle) mit einem entsprechenden Siebeinsatz von 200 $\mu$m oder weniger. Alternativ können auch Luftstrahlmühlen eingesetzt werden.

Das Produkt des Vorsinterschrittes (b) ist nicht mehr pulverförmig, sondern besteht aus zu einer Art Kuchen verklebten Pulver, das ohne Mahlen nicht weiter verarbeitet werden kann. Durch den Mahlschritt wird das im Vorsinterschritt zusammen gebackene Pulver wieder in Pulverform gebracht, so dass es in nachfolgenden Schritten in eine beliebige Form gebracht und so weiterverarbeitet werden kann. Es wurde gefunden, dass die Korngröße und die Korngrößenverteilung des gemahlenen Vorsinterproduktes einen Einfluss auf die Porenanzahl und Porenverteilung des Endproduktes haben. Im Endprodukt liefern viele kleine Poren einen hohen Luftdurchsatz und gleichzeitig einen hohen Wasserrückhalt, was bevorzugt ist. Es wurde weiter gefunden das eine besonders vorteilhafte Kombination von Eigenschaften des Endproduktes erhalten wird, wenn die Partikelgröße des gemahlenen Sinterproduktes 200 μm oder weniger beträgt.

Der Schritt des isostatischen Formpressens (d) des gemahlenen Pulvers kann vorzugsweise im Wasserbad durchgeführt werden. Das gemahlene Pulver wird vorzugsweise zunächst in einer Vorpressform in Form gepresst. Beispielsweise kann eine Vorpressform aus Aluminium für Ronden ("Donut"-Form) mit einem Außendurchmesser von 100 mm, einem Innendurchmesser von 37 mm und einer Höhe von 30 bis 35 mm verwendet werden. Eine derartige Vorpressform wird mit etwa 250 g des gemahlenen Pulvers befüllt und dieses zu entsprechend geformten Ronden ("Donuts") vorgepresst. Die Rondenform ist für die weitere Verarbeitung und Untersuchung der Produkteigenschaften vorteilhaft. Die der Vorpressform entnommenen Rohpresslinge werden dann vorzugsweise in Folie unter Vakuum eingeschweißt ("vakuumiert"). Die vorzugsweise in Folie eingeschweißten Rohpresslinege werden dann in einer entsprechenden isostatischen Presse fertig gepresst. Geeignete isostatische Pressen können beispielsweise von der Fa. Lauffer oder der Fa. Dieffenbacher bezogen werden. Bevorzugt erfolgt das isostatische Pressen in Wasser, aber es kann auch jedes andere geeignete Medium (Fluid) verwendet werden. Bevorzugt wird das isostatische Pressen bei Drücken von 5 bis 500 bar durchgeführt, weiter bevorzugt bei Drücken von 20 bis 450 bar, noch weiter bevorzugt bei Drücken von 25 bis 400 bar, und besonders bevorzugt bei einem Druck, der ausgewählt wird aus 25 bar, 50 bar, 100 bar, 200 bar, 300 bar, und 400 bar. Durch das isostatische Pressen erhält das Material eine sehr homogene Struktur, die im Endprodukt in sehr konstanten Werten für Luftdurchlässigkeit und Wassereintrittsdruck resultiert. Ohne den Schritt des isostatischen Nachpressens, d.h. wenn das Material beispielsweise nur hydraulisch, beispielsweise monoaxial (d.h. nur aus einer Richtung, z.B. von oben) oder bi-axial (d.h. aus zwei vorzugsweise entgegengesetzten Richtungen, z.B. von oben und von unten), gepresst wird, wird keine ausreichende Homogenität im Endprodukt erhalten. Das Material weist dann einen Dichtegradienten auf, beispielsweise von oben bzw. unten zur Mitte hin.

Bevorzugt wird das isostatische Formpressen bei einem Druck von 5 bis 500 bar durchgeführt. Dadurch werden im Endprodukt Dichten erhalten, die mit besonders vorteilhaften Produkteigenschaften verbunden sind.

Der Sinterschritt (e) des Presskörpers umfasst vorzugsweise die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e8) Abkühlen von 335°C auf 300°C in 5 Stunden, und
(e9) Abkühlen von 300°C auf Raumtemperatur in 3 Stunden.

Es wurde gefunden, dass Abweichungen im Sinterprogramm einen negativen Einfluss auf die Eigenschaften des Endproduktes haben. Beispielsweise liefert ein zu kurzen Sintern ein inhomogenes Produkt. Ein zu schnelles Aufheizen erzeugt Spannungen im Produkt, die im ungünstigsten Fall zu Rissen darin führen können. Ein analoges Problem tritt bei zu schnellem Abkühlen auf. Wird auf eine zu hohe Temperatur geheizt, beginnt die Zersetzung mit gefährlichen Spaltprodukten. Deshalb muss darauf geachtet werden, dass die Temperatur 400°C nicht übersteigt. Es wurde weiter gefunden, dass die Abkühlgeschwindigkeit im Temperaturbereich um 290°C einen besonderen Einfluss auf die Kristallinität des Endproduktes hat, was sich auf den Luftfluss und den Wassereintrittsdruck desselben auswirken kann. Die Untersuchungen der Erfinder der vorliegenden Erfindung haben gezeigt, dass durch Sintern gemäß der oben beschriebenen Schritte e1) bis e9) ein besonders vorteilhaftes Endprodukt erhalten wird.

Das Polymermaterial ist somit durch ein Herstellungsverfahren erhältlich, das keine Reckschritte aufweist. Dadurch zeigt das Polymermaterial folgende vorteilhafte Eigenschaften gegenüber einem gereckten ePTFE-Material: das Material zeigt kein Schrumpfen bei erhöhter Temperatur und weist bei gleicher Dicke eine höhere mechanische Stabilität auf. Insbesondere wurde gefunden, dass das Polymermaterial im Vergleich mit einem gereckten e-PTFE-Material eine homogenere Struktur aufweist. Somit zeigt eine daraus hergestellte Membran vorteilhaft konstantere Durchflusswerte.

Eine erfindungsgemäße Membran umfasst bevorzugt ein hier beschriebenes Polymermaterial. Besonders bevorzugt besteht eine erfindungsgemäße Membran aus dem beschriebenen Polymermaterial.

Im Gegensatz zu einem gereckten und laminierten Material des Standes der Technik weist eine erfindungsgemäße Membran keine weiteren Elemente, wie beispielsweise ein Stützgewebe oder dergleichen, auf.

Neben Membranen (Folien) können aus dem Polymermaterial auch Drehprodukte oder andere Teile hergestellt werden, wie beispielsweise Hütchen, Stifte, O-Ringe, und dergleichen.

Bevorzugt umfasst eine erfindungsgemäße Membran eine Folie mit einer Dicke von 0,1 bis 5,0 mm, weiter bevorzugt von 0,2 bis 1,5 mm. Besonders bevorzugt sind Folien mit einer Dicke von 0,2 mm, 0,3 mm, 0,5 mm und 1,0 mm.

Bevorzugt weist die erfindungsgemäße Membran einen Luftfluss von 10 Nl/h•cm$^2$ oder mehr auf, weiter bevorzugt von 14 Nl/h•cm$^2$ oder mehr, und besonders bevorzugt von 16 Nl/h•cm$^2$ oder mehr, jeweils bei $\Delta p$ = 70 mbar (= 1 psi).

Im Sinne dieser Erfindung kennzeichnet der Luftfluss einer Membran die Luftdurchlässigkeit der Membran. Alternativ kann die Luftdurchlässigkeit der Membran beispielsweise auch gemäß ISO 5636/5 bzw. dem Gurley-Test bestimmt werden.

Der Luftfluss kann beispielsweise gemessen werden, indem eine definierte Fläche (z.B. 1 cm$^2$) einer zu untersuchenden Membran auf einer Seite mit einem einstellbaren Luftdruck, z.B. von 70 mbar (1 psi), belastet wird. Nach einer Durchströmung von beispielsweise 10 Sekunden (Beruhigungszeit) wird der Fluss elektronisch ausgelesen. Der Luftfluss wird üblicherweise unter Angabe des angelegten Druckes in der Einheit Nl/h (Normliter pro Stunde), normiert auf eine Einheitsfläche (z.B. 1 cm$^2$), angegeben. Ein Normliter entspricht dabei einem Liter Gas (Raumluft) bei 0°C und 1013 mbar.

Bevorzugt weist die erfindungsgemäße Membran ein Wasserrückhaltevermögen von mindestens 0,40 bar auf, weiter bevorzugt von mindestens 0,45 bar auf, noch weiter bevorzugt von mindestens 0,55 bar, und besonders bevorzugt von mindestens 0,60 bar, jeweils ausgedrückt als Wassereintrittsdruck. Als Wassereintrittsdruck wird der Minimale Druck definiert, der benötigt wird, um Wasser durch die größten Poren der Membran zu pressen.

Im Sinne dieser Erfindung kennzeichnet das Wasserrückhaltevermögen einer Membran die Wasserundurchlässigkeit der Membran.

Das Wasserrückhaltevermögen einer Membran kann beispielsweise gemessen werden, indem eine zu untersuchende Membran waagerecht montiert und von unten mit einem konstant steigenden Wasserdruck beaufschlagt wird. Mittels einer Kamera wird beobachtet, bei welchem Druck sich ein erster Wassertropfen an der Oberfläche der Oberseite der Membran zeigt. Beim Auftreten eines Wassertropfens wird der entsprechende Druck als "Wassereintrittsdruck" ausgelesen.

Der Wassereintrittsdruck wird üblicherweise in der Einheit bar angegeben.

Besonders bevorzugt weist die erfindungsgemäße Membran gleichzeitig einen Luftfluss von 0,5 bis 300 Nl/h•cm$^2$ bei $\Delta P$ = 70 mbar und ein Wasserrückhaltevermögen von 0,1 bis 2,0 bar auf, weiter bevorzugt einen Luftfluss von 5 bis 30 Nl/h•cm$^2$ bei $\Delta P$ = 70 mbar und ein Wasserrückhaltevermögen von 0,3 bis 0,9 bar, und besonders bevorzugt einen Luftfluss von 15 Nl/h•cm$^2$ bei $\Delta P$ = 70 mbar oder mehr, und ein Wasserrückhaltevermögen von 0,6 bar oder mehr.

Bevorzugt ist die erfindungsgemäße Membran durch ein Verfahren erhältlich, das die folgenden Schritte umfasst:

(a) Mischen von Polytetrafluorethylen und Rußpartikeln, wobei Polytetrafluorethylen und Rußpartikel wie in den vorherigen Ansprüchen charakterisiert sind;

(b) Sintern der Mischung bei 320 bis 350°C für 30 bis 210 Minuten;

(c) Zermahlen des Sinterproduktes auf eine Partikelgröße von 200 μm oder weniger;

(d) Isostatisches Formpressen des gemahlenen Pulvers;

(e) Sintern des Presskörpers bei 360 bis 380°C für 4 bis 10 Stunden; und

(f) Mechanische Fertigbearbeitung.

Bevorzugt wird der Sinterschritt (b) bei 340°C für 120 Minuten durchgeführt. Bevorzugt wird der Sinterschritt (e) bei 365°C für 5 Stunden durchgeführt.

Details zu den Schritten (a) bis (d) sind wie oben beschrieben.

Bevorzugt umfasst der Sinterschritt (e) des Presskörpers die folgenden Schritte:

(e1) Aufheizen von Raumtemperatur auf 300°C in 5 Stunden,

(e2) Aufheizen von 300°C auf 335°C in 3 Stunden,

(e3) Halten bei 335°C für 2 Stunden,

(e4) Aufheizen von 335°C auf 365°C in 3 Stunden,

(e5) Halten bei 365°C für 5 Stunden,

(e6) Abkühlen von 365°C auf 335°C in 3 Stunden,

(e7) Halten bei 335°C für 3 Stunden,

(e8) Abkühlen von 335°C auf 300°C in 5 Stunden, und

(e9) Abkühlen von 300°C auf Raumtemperatur in 3 Stunden.

Bevorzugt umfasst der Schritt der mechanischen Fertigbearbeitung (f) ein Abschälen einer Folie mit einer Dicke von 0,1 bis 5,0 mm von dem gesinterten Presskörper.

Weiter bevorzugt wird eine Folie mit einer Dicke von 0,2 bis 1,5 mm abgeschält, und besonders bevorzugt eine Folie mit einer Dicke von 0,2 bis 0,3 mm.

'Abschälen einer Folie' bedeutet hierbei die Herstellung einer Folie mit Hilfe einer geeigneten Hobeleinrichtung. Beispielsweise wird eine Folie mit Hilfe einer Schälmaschine, die eine ähnliche Funktion wie eine Drehbank aufweist, hergestellt. Dabei wird ein festes Messer in vorgegebener Weise an eine sich drehende Rondenform angenähert, so dass eine Folie entsteht (vergleichbar der Herstellung eines Furniers).

Beispielsweise erfolgt das Abschälen einer Folie mit Hilfe einer geeigneten Vorrichtung, in der eine Klinge so an einen rotierenden Presskörper mit beispielsweise Zylinder- oder Ringform herangeführt wird, dass eine Folie entsprechender Dicke abgeschält (abgetragen) wird.

Das Abschälen einer Folie hat den Vorteil, dass dabei die innere Struktur des gesinterten Materials des Presskörpers nicht verändert wird, wie es z.B. bei der Herstellung einer Folie durch Kalandrieren, Walzen und dergleichen erfolgen kann.

Darüber hinaus lassen sich durch Abschälen leicht Folien mit sehr variable Dicken Dicken schälen, beispielsweise mit Dicken im Bereich von 0,1 bis 5,0 mm, oder mit 7 mm.

Es wurde gefunden, dass eine Membran, die durch Abschälen hergestellt wird ("Schälfolie"), selbst bei größerer Dicke, einen höheren und damit besseren Luftfluss als eine extrudierte Folie aufweist.

Weiterhin ist wichtig, dass die erfindungsgemäße Membran durch ein Herstellungsverfahren erhältlich ist, das keine Reckschritte aufweist. Dadurch zeigt die erfindungsgemäße Membran folgende vorteilhafte Eigenschaften gegenüber einem gereckten ePTFE-Material: die Membran zeigt kein Schrumpfen bei erhöhter Temperatur und weist bei gleicher Dicke eine höhere mechanische Stabilität auf. Zusätzlich hat die erfindungsgemäße Membran auch einen sehr viel höheren Temperatureinsatzbereich, da keine Stützschicht z.B. aus Polyester erforderlich ist.

Ein weiterer Aspekt der vorliegenden Erfindung stellt ein Druckausgleichselement bereit, das ein erfindungsgemäßes Polymermaterial und/oder eine erfindungsgemäße Membran umfasst.

In einer bevorzugten Ausführungsform besteht ein erfindungsgemäßes Druckausgleichselement aus einer erfindungsgemäßen Membran, die direkt über einer Öffnung im Gehäuse angebracht werden kann.

Beispielsweise wird die Membran mit einem geeigneten Klebstoff direkt über die Gehäuseöffnung geklebt. Geeignete Klebstoffe sind beispielsweise modifizierte Acrylatkleber, Kleber auf Silikonbasis, und dergleichen.

Der Klebstoff kann beispielsweise über ein Transferklebeband auf die erfindungsgemäße Membran aufgebracht werden. Geeignete Klebebänder sind beispielsweise von der Fa. 3M unter der Bezeichnung 9471LE-Klebeband oder 9460-Klebeband (modifizierte Acrylatkleber) bzw. 91022-Klebeband oder 96042-Klebeband (Silikonkleber) erhältlich.

Alternativ kann die Membran auch durch Einklemmen mittels O-Ring und Klemmring in einer Stufenbohrung befestigt werden. Eine andere bevorzugte Befestigung der Membran umfasst das Umspritzen mit Kunststoff, beispielsweise mittels Spritzgusstechnik. Alternativ kann die Membran auch durch ein teilweises Eingießen mit einem geeigneten Kunststoff, wie beispielsweise Silikon, Epoxid, oder dergleichen, befestigt werden.

Bevorzugt wird die erfindungsgemäße Membran klebstoffbeschichtet bereitgestellt, wobei die Klebstoffbeschichtung vorzugsweise einen Haftklebstoff umfasst ("selbstklebende Druckausgleichselemente"). Geeignete Klebstoffe sind beispielsweise modifizierte Acrylatkleber, Kleber auf Silikonbasis, und dergleichen. Geeignete Haftklebstoffe sind beispielsweise Transferklebstoffe auf Acrylat- oder Silikon-Basis, wie z.B. die Produkte 9460 oder 9471LE von der Fa. 3M (s.o.).

Alternativ kann die Membran auch durch geeignete Schweißtechniken über der Gehäuseöffnung angebracht werden, beispielsweise durch thermisches oder Ultraschallschweissen, und dergleichen.

Weiter bevorzugt ist ein Druckausgleichselement, das ein Gehäuse umfasst, das eine erfindungsgemäße Membran aufnimmt. Derartige Druckausgleichselemente mit Gehäuse sind im Fachgebiet bekannt, und beispielsweise unter dem Handelsnamen "Druckausgleichs-Clipfilter" von der Fa. Infiltec (Speyer, Deutschland) oder unter dem Handelsnamen "Protective Vent" von der Fa. W.L. Gore & Associates (Newark, Delaware, USA) erhältlich.

In einer bevorzugten Ausführungsform wird die erfindungsgemäße Membran in dem Gehäuse des erfindungsgemäßen Druckausgleichselements montiert, und das Druckausgleichselement dann in eine Gehäuseöffnung eingesetzt. Beispielsweise kann das Druckausgleichselement in eine Gehäuseöffnung eingeschraubt werden oder in der Gehäuseöffnung durch eine Schnappverbindung gesichert werden. Alternativ kann ein Druckausgleichselement auch in eine Gehäuseöffnung mit einem geeigneten Klebstoff eingeklebt oder werden, durch Schweißen befestigt werden, oder dergleichen.

Im Vergleich mit gerecktem PTFE (ePTFE) besteht die erfindungsgemäße Membran im erfindungsgemäßen Druckausgleichselement aus dem beschriebenen Polymermaterial, d.h. es werden keine Fremdmaterialien, wie beispielsweise ein Stützgewebe und/oder Sieb oder dergleichen, benötigt, wodurch vorteilhaft Kosten für weitere Materialien entfallen. Durch das fehlende Stützvlies oder -Gewebe hat die erfindungsgemäße Membran keine Vorzugsrichtung für den Einbau, und kann daher vorteilhaft beidseitig eingebaut werden.

Neben Druckausgleichselementen, die eine erfindungsgemäße Membran umfassen, können in anderen Ausführungsformen der vorliegenden Erfindung auch Bauteile aus dem Polymermaterial umfasst sein, die nicht auf der Form einer Folie basieren. Beispiele für solche alternativen Ausführungsformen sind Dichtungen, die Wasserdicht, aber atmungsaktiv sind, beispielsweise in Form von O-Ringen, Drehteilen, Frästeilen, porösen Rohren für Begasungen, und dergleichen. Durch zerspanende Bearbeitung des Polymermaterials sind derartige ("dreidimensionale") Bauteile herstellbar, die mit gerecktem PTFE nicht herstellbar sind.

Insbesondere ist es mit dem Polymermaterial möglich, dreidimensionale Bauteile, wie beispielsweise Rohre oder dergleichen, herzustellen. Derartige Rohre können beispielsweise als Bubbling-Einheit dienen, z.B. um stark ätzende Säuren oder Laugen durch Einblasen von Luft zu durchmischen, ohne dass nach Abschalten der Luftzufuhr die ätzende Flüssigkeit in das poröse Rohr eindringt.

Ein Verfahren zur Herstellung eines Polymermaterials, das Polytetrafluorethylen und Ruß umfasst, umfasst die folgenden Schritte:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers;
(e) Sintern des Presskörpers bei 360 bis 380°C für 4 bis 10 Stunden.

Details zu den Schritten (a) bis (d) sind wie oben beschrieben.

Bevorzugt umfasst der Sinterschritt (e) des Presskörpers die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e8) Abkühlen von 335°C auf 300°C in 5 Stunden, und
(e9) Abkühlen von 300°C auf Raumtemperatur in 3 Stunden.

In einem weiteren Aspekt stellt die vorliegende Erfindung ein Verfahren zur Herstellung einer Membran bereit, wobei das Herstellungsverfahren die folgenden Schritte umfasst:

(a) Mischen von Polytetrafluorethylen und Rußpartikeln, wobei Polytetrafluorethylen und Rußpartikel wie zuvor charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers;
(e) Sintern des Presskörpers bei 360 bis 380°C für 4 bis 10 Stunden; und
(f) Mechanische Fertigbearbeitung.

Details zu den Schritten (a) bis (d) sind wie oben beschrieben.

Bevorzugt umfasst der Sinterschritt (e) des Presskörpers dabei die folgenden Schritte:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e8) Abkühlen von 335°C auf 300°C in 5 Stunden, und
(e9) Abkühlen von 300°C auf Raumtemperatur in 3 Stunden.

Details zum Schritt (f) sind wie oben beschrieben.

In einem weiteren Aspekt stellt die vorliegende Erfindung eine Verwendung einer erfindungsgemäßen Membran als wesentlichen Bestandteil eines Druckausgleichselements bereit.

**Beispiele**

In den folgenden Beispielen und Vergleichsbeispielen werden die folgenden Komponenten eingesetzt.

**1. Polytetrafluorethylen (PTFE)**

Als PTFE wird ein virginales, nicht angesintertes S-Polymerisat eingesetzt. Das PTFE wird in Form eines nicht frei fließenden PTFE-Pulvers (NFF, Non Free Flow) mit einer mittleren Partikelgröße von 20 $\mu$m verwendet. Das PTFE wurde unter dem Handelsnamen "INOFLON 640" von der Fa. Gujarat Fluorochemicals Limited (GFL), Noida, Indien bezogen. Die nach ASTM D 4894 bestimmten Eigenschaften des PTFE sind wie folgt:

Schüttdichte (Bulk Density): 380 g/L
Mittlere Teilchengröße (d50): 20 $\mu$m
Mold Shrinkage (Max.): 4%
Std. Specific Gravity (SSG): 2,15-2,18
Melting Point Initial: 342°C
Melting Point Second: 327°C
Zugfestigkeit: 30 MPa
Elongation: 350%

**2. Rußpartikel**

Als Ruß wird ein technischer Industrieruß (carbon black) eingesetzt. Der Ruß wurde unter dem Handelsnamen "Printex 80" von der Fa. Orion Engineered Carbons (ehemals EVONIK) bezogen. Die Ruß wird durch folgende Eigenschaften bestimmt:

Primärteilchengröße (Zeiss TGZ3 Analyzer): 16 nm
BET-Oberfläche (ASTM D6556/ISO 4652): 225 $m^2$/g
Flüchtige Bestandteile (950°C; DIN 53552): 1,2%
Extrahierbare Bestandteile (Toluol-Extrakt, 8h): $\leq$ 0,10
pH-Wert (ISO 787-9 / ASTM D 1512): 9,0

```
Tint Strength IRB = 100% (ISO 5435 / ASTM D 3265): 136,0%

                                          (129,0% - 143,0%)
```

Schwarzzahl My (DIN 55979), am Pulverruß bestimmt: 261,0
OAN (ISO 4656 / ASTM D 2414): 105,0 (98,0 - 112,0) ml/100 g
Siebrückstand 45 $\mu$m Mocker: $\leq$ 75 ppm

**Beispiel 1: Herstellung der erfindungsgemäßen Membranen**

45 g Ruß werden mit einem Handrührgerät grob mit 1455 g PTFE-Pulver vermischt, um 1500 g einer Vormischung herzustellen. Die Vormischung wird portionsweise in einer Retsch-Labormühle ZM200 mit großem Siebeinsatz (0,5 bis 2 mm) bei einer Drehzahl des Schlagrotors von 18000 U/min gemischt bzw. homogenisiert.

Dieses Verfahren entspricht dem im großtechnischen Maßstab angewendeten, in dem sog. "Tornados" eingesetzt werden.

Im Anschluß wird die zusammengeführte Mischung nochmals homogenisiert und in gleichmäßigen Portionen mit einer gleichmäßigen Schütthöhe von ca. 1 bis 1,5 cm auf 6 Blechwannen mit einer Größe von etwa 300 x 500 mm verteilt.

Die Bleche mit der Mischung werden in einem Sinterofen innerhalb von 1 Stunde von Raumtemperatur auf 340°C erhitzt und dann für 120 Minuten bei 340°C gehalten. Danach werden die Bleche aus dem Ofen genommen, um die Mischung abzukühlen. Nach Abkühlen auf Raumtemperatur werden die nun zu Platten verbackenen Mischungen mittels obiger Labormühle (Siebeinsatz 200 $\mu$m) zermahlen, und die zusammengeführte gesinterte Mischung homogenisiert.

Das so erhaltene schwarze Pulver wird in 6 Portionen zu 250 g geteilt. Jede Protion wird in eine ringförmige Pressform aus Aluminium (Donutform) gegeben und zu Ringen mit einem Aussendurchmesser von 100 mm, einem Innendurchmesser von 37 mm, und einer Höhe von ca. 40 mm vorgepresst. Die vorgepressten Ringe weisen einen 4-Kant-Querschnitt auf. Die vorgepressten Ringe werden mit einem Gerät Gilde VacMeister in PA/PE-Folie bei 10 bis 50 mbar vakuumiert und im Wasserbad isostatisch nachgepresst. Dabei wird jeweils einer der 6 Ringe bei einem Nachpressdruck von 25, 50, 100, 200, 300 bzw. 400 bar isostatisch gepresst, um die Proben 1 bis 6 zu erhalten.

Nach Entfernen der Folien werden die Ringe in einem Sinterofen unter Verwendung eines entsprechenden computergesteuerten Sinterprogramms zuerst von Raumtemperatur auf 300°C in 5 Stunden aufgeheizt, dann in 3 Stunden von 300°C auf 335°C aufgeheizt, für 2 Stunden bei 335°C gehalten, dann in 2 Stunden von 335°C auf 365°C aufgeheizt, für 5 Stunden bei 365°C gehalten, dann in 3 Stunden von 365°C auf 335°C abgekühlt, für 3 Stunden bei 335°C gehalten, dann in 5 Stunden von 335°C auf 300°C abgekühlt, und abschließend in 12 Stunden von 300°C auf Raumtemperatur abgekühlt. Als Sinterofen wurde ein Ofen Nabertherm N2880/45HA (groß) oder N60/HA (klein) verwendet.

Nach vollständigem Abkühlen werden die gesinterten Presslinge (Donuts) auf einer Schälmaschine Weyrauch Super-A-500 zu porösen Folien (Membranen) mit einer Dicke von 0,3 mm, 0,5 mm und 1,0 mm und einer Breite von 30 bis 35 mm geschält. Für die nachfolgenden Untersuchungen wurden die abgeschälten Folien auf eine Länge von etwa 50 cm unterteilt.

Es wurde gefunden, dass Proben, die nicht isostatisch gepresst worden waren, unabhängig von der Zusammensetzung, lediglich inhomogene Bereiche innerhalb des Materials aufwiesen, und somit nicht zu brauchbaren Folien weiterverarbeitet werden konnten. Die Inhomogenität des Materials führt zu starken Schwankungen bei Luftdurchsatz und Wassereintrittsdrücken. Daher wurden in den vorliegenden Beispielen und Vergleichsbeispielen nur Folien aus isostatisch gepressten Materialien hergestellt.

Die physikalisch/technischen Eigenschaften der so hergestellten porösen Folien bzw. Membranen werden durch folgende Verfahren bestimmt:

Luftdurchsatzmessung:

Aus der zu untersuchenden Folie mit definierter Dicke werden runde Scheiben mit einem Durchmesser von 1,79 cm gestanzt und in einer runden Klemmung mit einem Durchmesser von 11,3 mm befestigt, so dass genau 1 cm$^2$ der Folie als offene Messfläche zugänglich bleibt.

Zur Durchführung der Messung wird auf einer Seite der Probenfolie (Membran) ein Luftdruck von 70 mbar angelegt, während auf der anderen Seite Umgebungsdruck (Normaldruck, etwa 1013 mbar) herrscht, und nach einer Durchströmung von 10 Sekunden der Fluss elektronisch ausgelesen. Die Messung des Flusses erfolgt mit einem Druckmesser der Fa. Keller, der in eine elektronische Protokollierung mittels PC integriert ist. Der Durchfluss wurde mit einem geeigneten Durchflussmessgerät der Firma "Analyt MTC" gemessen.

Die erhaltenen Messdaten sind in Tabelle 1 zusammengefasst.

Messung des Wassereintrittsdrucks:

Die Probenvorbereitung erfolgt wie bei der Luftdurchsatzmessung beschrieben.

Zur Durchführung der Messung wird die Probenfolie (Membran) waagerecht montiert und von unten mit einem konstant steigenden Wasserdruck von etwa 2 mbar/s beaufschlagt. Mittels einer Kamera wird die Oberseite der Probenfolie beobachtet und der Zeitpunkt notiert, bei dem sich der erste Wassertropfen mit einer Größe von 0,2 bis 0,4 mm oder mehr an der Oberfläche zeigt. Die Detektion durch die Kamera ist ausführlich weiter oben beschrieben. Der zu diesem Zeitpunkt angelegte Druck wird als "Wassereintrittsdruck" elektronisch ausgelesen.

Die erhaltenen Messdaten sind in Tabelle 1 zusammengefasst.

Bestimmung der Porengröße:

Die Porengröße der Probenfolien (Membranen) wird mittels Standardmessverfahren nach DIN ISO 4003 oder durch Quecksilberintrusion gemessen. Dazu wird jeweils eine runde Scheibe mit einem Durchmesser von 29 mm ausgestanzt, vollständig mit der Prüfflüssigkeit getränkt und die Scheibe so in eine geeignete Halterung geklemmt, dass ein freier Innendurchmesser von 20 mm verbleibt. Die Höhe h der überschichteten Flüssigkeit beträgt 30 mm. Als Prüfflüssigkeit wird Ethanol verwendet. Der Druckanstieg beträgt 1 mbar/sec. Es wird trockene Druckluft eingesetzt. Der Druck wird mit einem kalibrierten digitalen Manometer gemessen.

Die erhaltenen Messdaten sind in Tabelle 1 zusammengefasst.

Bestimmung des Probenvolumens und der Porosität:

Zur Bestimmung des Probenvolumens und der Porosität wird ein Teil mit definierten Abmessungen aus den Probenfolien hergestellt. Dazu wird eine Scheibe mit einem Durchmesser von 26 mm aus den jeweiligen Folien ausgestanzt und die Dicke gemessen. Das Volumen (V) des Teils wird aus diesen Abmessungen berechnet. Dann wird das Teil gewogen, um die Masse (m) zu bestimmen, und die Dichte (d) wird als Quotient aus Masse (m) und Volumen (V) berechnet (d = m/V). Die berechnete Dichte eines definierten Teils aus den Probenfolien aus porösem PTFE wird zu der Dichte von massiven PTFE (2,17 g/cm$^3$) in Relation gesetzt. Dabei wird der Einfluss des Rußes vernachlässigt, weil gefunden Wurde, dass er gering ist.

Die Porosität wird dann mittels folgender Gleichung berechnet:

$$\texttt{Porosität [in \%] = (1 - d}_{\texttt{Probe}}\texttt{/d}_0\texttt{) * 100}$$

mit $d_{Probe}$ = Dichte der Probe und $d_0$ = Dichte von massivem PTFE, jeweils in g/cm$^3$.
Die erhaltenen Messdaten sind in Tabelle 1 zusammengefasst.

Bestimmung von Zugfestigkeit und Reißdehnung:

Zugfestigkeit und Reißdehnung der Probenfolien werden mittels Standardmessverfahren nach DIN EN ISO 527-1, DIN EN ISO 527-2 und DIN EN ISO 527-3 gemessen. Dazu wurden Probekörper mit den empfohlenen Abmessungen (Dicke: 1,5 mm) nach SPI-Standard FD-105 hergestellt. Die Prüfgeschwindigkeit beim Zugversuch betrug 50 mm/min.
Die erhaltenen Messdaten sind in Tabelle 1 zusammengefasst.

Tabelle 1: Messdaten von erfindungsgemäßen Membranen

| Probennummer | Druck beim isostatischen Pressen [bar] | Dicke der Membran [mm] | Luftfluss @70 mbar [Nl/h•cm$^2$] | Wassereintrittsdruck [bar] |
|---|---|---|---|---|
| 1 | 25 | 0,5 | 65,7 | 0,21 |
| 2 | 25 | 0,5 | 58,7 | 0,32 |
| 3 | 25 | 1,0 | 26,4 | 0,46 |
| 4 | 25 | 1,0 | 28,0 | 0,48 |
| 5 | 50 | 0,5 | 38,6 | 0,47 |
| 6 | 50 | 0,5 | 36,9 | 0,48 |
| 7 | 50 | 1,0 | 16, 0 | 0,60 |
| 8 | 50 | 1,0 | 14,3 | 0,60 |
| 9 | 100 | 0,5 | 19,0 | 0,62 |
| 10 | 100 | 0,5 | 20,1 | 0,59 |
| 11 | 100 | 1,0 | 7,8 | 0,69 |
| 12 | 100 | 1,0 | 7,5 | 0,74 |
| 13 | 200 | 0,5 | 7,5 | 0,86 |
| 14 | 200 | 0,5 | 7,7 | 0,87 |
| 15 | 200 | 1,0 | 3,5 | 1,00 |
| 16 | 200 | 1,0 | 3,5 | 1,00 |
| 17 | 300 | 0,5 | 4,5 | 1,03 |
| 18 | 300 | 0,5 | 4,5 | 1,03 |
| 19 | 300 | 1,0 | 1,7 | 1,10 |

(fortgesetzt)

| Probennummer | Druck beim isostatischen Pressen [bar] | Dicke der Membran [mm] | Luftfluss @70 mbar [Nl/h•cm²] | Wassereintrittsdruck [bar] |
|---|---|---|---|---|
| 20 | 300 | 1,0 | 2,2 | 1,07 |
| 21 | 400 | 0,5 | 3,1 | 1,04 |
| 22 | 400 | 0,5 | 3,1 | 0,99 |
| 23 | 400 | 1,0 | 1,6 | 1,17 |
| 24 | 400 | 1,0 | 1,6 | 1,17 |

Wie aus Tabelle 1 entnommen werden kann, zeigen alle erfindungsgemäßen Membranen vorteilhaft einen sehr hohen Luftfluss bei gleichzeitig hohem Wassereintrittsdruck. Insbesondere weisen alle erfindungsgemäßen Membranen einen Luftfluss und/oder Wassereintrittsdruck auf, der bzw. die den höchsten Anforderungen (s.o.) genügen. Die Proben 3 bis 10 erfüllen beide Anforderungen gleichzeitig.

Durch Variation der anderen Herstellungsparameter, wie beispielsweise des Mischverhältnisses, der Vorsintertemperatur, usw., können weitere erfindungsgemäße Membranen hergestellt werden, die beide Anforderungen erfüllen. Die Proben 7 und 9 erfüllen sogar die höchsten Anforderungen, die wie folgt gegeben sind:

ein Luftdurchsatz bei $\Delta p$ = 70 mbar von Nl/h•cm² oder mehr; und
ein Wassereintritt von 0,6 bar oder mehr.

**Vergleichsbeispiel 1: Herkömmliche Membran aus PTFE**

Als Vergleichsbeispiel 1 wurde eine Membran aus reinem PTFE hergestellt. Dazu wurde Beispiel 1 wiederholt, jedoch ohne dass Ruß zugesetzt wurde.
Die Ergebnisse sind in Tabelle 2 zusammengefasst.

Tabelle 2: Messdaten von Membranen aus reinem PTFE

| Probennummer | Druck beim isostatischen Pressen [bar] | Dicke der Membran [mm] | Luftfluss @70 mbar [Nl/h•cm²] | Wassereintrittsdruck [bar] |
|---|---|---|---|---|
| V1 | 25 | 0,5 | 65,2 | 0,26 |
| V2 | 25 | 0,5 | 69,2 | 0,25 |
| V3 | 25 | 1,0 | 30,9 | 0,30 |
| V4 | 25 | 1,0 | 34,0 | 0,29 |
| V5 | 50 | 0,5 | 45,8 | 0,29 |
| V6 | 50 | 0,5 | 39,8 | 0,33 |
| V7 | 50 | 1,0 | 17,8 | 0,38 |
| V8 | 50 | 1,0 | 17,7 | 0,37 |
| V9 | 100 | 0,5 | 17,9 | 0,47 |
| V10 | 100 | 0,5 | 18,3 | 0,41 |
| V11 | 100 | 1,0 | 7,7 | 0,48 |
| V12 | 100 | 1,0 | 7,5 | 0,51 |
| V13 | 200 | 0,5 | 6,0 | 0,53 |
| V14 | 200 | 0,5 | 7,0 | 0,57 |
| V15 | 200 | 1,0 | 2,8 | 0,63 |
| V16 | 200 | 1,0 | 2,8 | 0,62 |

(fortgesetzt)

| Probennummer | Druck beim isostatischen Pressen [bar] | Dicke der Membran [mm] | Luftfluss @70 mbar [Nl/h•cm²] | Wassereintrittsdruck [bar] |
|---|---|---|---|---|
| V17 | 300 | 0,5 | 3,7 | 0,69 |
| V18 | 300 | 0,5 | 4,2 | 0,61 |
| V19 | 300 | 1,0 | 2,0 | 0,79 |
| V20 | 300 | 1,0 | 1,7 | 0,74 |
| V21 | 400 | 0,5 | 2,6 | 0,78 |
| V22 | 400 | 0,5 | 2,9 | 0,73 |
| V23 | 400 | 1,0 | 1,4 | 0,82 |
| V24 | 400 | 1,0 | 1,4 | 0,80 |

Im Gegensatz zu der in Vergleichsbeispiel 1 hergestellten Membran zeigt die in Beispiel 1 hergestellte erfindungsgemäße Membran einen deutlich höheren Luftfluss bei vergleichbarer Wasserundurchlässigkeit (Wassereintrittsdruck), und somit eine besonders vorteilhafte Kombination dieser für die Anwendung wichtigen Eigenschaften.

Beispielsweise zeigt eine erfindungsgemäße Membran mit einer Dicke von 1,0 mm einen Luftfluss von 28,0 $Nl/h•cm^2$ (@$\Delta p$ = 70 mbar) und einen Wassereintrittsdruck von 0,48 bar (s. Probennummer 4 in Tabelle 1), während eine gleich dicke Membran aus reinem PTFE mit einem vergleichbaren Wassereintrittsdruck von 0,48 bar lediglich einen Luftfluss von 7,7 $Nl/h•cm^2$ (@$\Delta p$ = 70 mbar) zeigt (s. Probennummer V11 in Tabelle 2). Damit weist die erfindungsgemäße Membran gegenüber der herkömmlichen Membran bei gleichbleibenden Wassereintrittsdruck einen ca. 3,6-fachen Luftfluss auf.

Bei Betrachtung vergleichbarer Membranen mit einer Dicke von 1,0 mm und einem Wassereintrittsdruck von 0,74 bar (s. Probennummern 12 und V20 in Tabellen 1 und 2) beträgt der Luftfluss der erfindungsgemäßen Membran 7,5 $Nl/h•cm^2$ (@$\Delta p$ = 70 mbar) und der der Membran aus reinem PTFE lediglich 1,7 $Nl/h•cm^2$ (@$\Delta p$ = 70 mbar), was einem mehr als vierfach höheren Luftfluss der erfindungsgemäßen Membran entspricht.

Aus Tabelle 2 kann darüber hinaus entnommen werden, dass keine der in Vergleichsbeispiel 1 hergestellten Membranen einen Luftfluss und/oder Wassereintrittsdruck aufweist, der den Anforderungen für beide Eigenschaften (s.o.) gleichzeitig genügt.

**Patentansprüche**

1. Membran, umfassend ein Polymermaterial, umfassend Polytetrafluorethylen und Rußpartikel mit einer Primärteilchengröße von 5 bis 25 nm und einer BET-Oberfläche von 200 bis 250 $m^2$/g.

2. Membran nach Anspruch 1, wobei das Polytetrafluorethylen **gekennzeichnet ist durch** einen oder mehrere der Parameter, die ausgewählt werden aus:

    - einer Schüttdichte von 350 bis 400 g/L;
    - einem mittleren Molgewicht von $1•10^7$ bis $1•10^9$ g/mol;
    - einer durchschnittlichen Partikelgröße $d_{50}$ von 10 bis 30 $\mu$m;
    - einen ersten Schmelzpunkt von 340 bis 350°C; und nachfolgende Schmelzpunkte von 320 bis 330°C.

3. Membran nach Anspruch 1 oder 2, wobei die Rußpartikel weiter **gekennzeichnet sind durch** einen oder mehrere der Parameter, die ausgewählt werden aus:

    - eine Primärteilchengröße von 5 bis 25 nm;
    - eine BET-Oberfläche von 200 bis 250 $m^2$/g;
    - einen Gehalt an flüchtigen Bestandteilen von weniger als 2, 0%;
    - einen Gehalt an extrahierbaren Bestandteilen im Toluol-Extrakt, 8 h, von 0,5% oder weniger;
    - einen basischen pH-Wert von 8 oder mehr;
    - eine Tint Strength IRB = 100% von 125 bis 145%;

- OAN von 95 bis 115 ml/100g; und

eine Schwarzzahl My, am Pulverruß bestimmt, von 250 bis 280.

4. Membran nach einem der vorherigen Ansprüche, umfassend ein Polymermaterial, umfassend von 90 bis 99% Polytetrafluorethylen und von 1 bis 10% Rußpartikel.

5. Membran nach einem der vorherigen Ansprüche, wobei das Polymermaterial porös mit Poren mit einer Porengröße von 1 bis 15 $\mu$m ist.

6. Membran nach einem der vorherigen Ansprüche, wobei das Polymermaterial porös mit einer Porosität von 10 bis 65% ist.

7. Membran nach einem der Ansprüche 1 bis 6, wobei die Membran eine Folie mit einer Dicke von 0,1 bis 5,0 mm umfasst.

8. Membran nach einem der Ansprüche 1 bis 7, wobei die Membran einen Luftfluss von 0,5 bis 300,0 Nl/h•cm$^2$ und ein Wasserrückhaltevermögen von 0,1 bis 2,0 bar aufweist.

9. Membran nach einem der Ansprüche 1 bis 8, erhältlich durch ein Verfahren, umfassend die folgenden Schritte:

(a) Mischen von Polytetrafluorethylen und Rußpartikeln, wobei Polytetrafluorethylen und Rußpartikel wie in den vorherigen Ansprüchen charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers;
(e) Sintern des Presskörpers bei 360 bis 380°C für 4 bis 10 Stunden; und
(f) Mechanische Fertigbearbeitung.

10. Membran nach Anspruch 9, wobei der Sinterschritt (e) des Presskörpers die folgenden Schritte umfasst:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e8) Abkühlen von 335°C auf 300°C in 5 Stunden, und
(e9) Abkühlen von 300°C auf Raumtemperatur in 3 Stunden.

11. Membran nach einem der Ansprüche 9 bis 10, wobei der Schritt der mechanischen Fertigbearbeitung (f) ein Abschälen einer Folie mit einer Dicke von 0,1 bis 5,0 mm von dem gesinterten Presskörper umfasst.

12. Druckausgleichselement, umfassend eine Membran nach einem der Ansprüche 1 bis 11.

13. Druckausgleichselement nach Anspruch 12, weiter umfassend ein Gehäuse, das eine Membran nach einem der Ansprüche 1 bis 11 aufnimmt.

14. Verfahren zur Herstellung einer Membran, wobei das Herstellungsverfahren die folgenden Schritte umfasst:

(a) Mischen von Polytetrafluorethylen und Rußpartikeln, wobei Polytetrafluorethylen und Rußpartikel wie in den vorherigen Ansprüchen charakterisiert sind;
(b) Sintern der Mischung bei 320 bis 350°C für 30 bis 210 Minuten;
(c) Zermahlen des Sinterproduktes auf eine Partikelgröße von 200 $\mu$m oder weniger;
(d) Isostatisches Formpressen des gemahlenen Pulvers;
(e) Sintern des Presskörpers bei 360 bis 380°C für 4 bis 10 Stunden; und
(f) Mechanische Fertigbearbeitung.

**15.** Verfahren nach Anspruch 14, wobei der Sinterschritt (e) des Presskörpers die folgenden Schritte umfasst:

(e1) Aufheizen von Raumtemperatur auf 300°C in 5 Stunden,
(e2) Aufheizen von 300°C auf 335°C in 3 Stunden,
(e3) Halten bei 335°C für 2 Stunden,
(e4) Aufheizen von 335°C auf 365°C in 3 Stunden,
(e5) Halten bei 365°C für 5 Stunden,
(e6) Abkühlen von 365°C auf 335°C in 3 Stunden,
(e7) Halten bei 335°C für 3 Stunden,
(e8) Abkühlen von 335°C auf 300°C in 5 Stunden, und
(e9) Abkühlen von 300°C auf Raumtemperatur in 3 Stunden.

**16.** Verwendung einer Membran nach einem der Ansprüche 1 bis 11 als wesentlicher Bestandteil eines Druckausgleichselements.

**Claims**

**1.** Membrane comprising a polymer material comprising polytetrafluoroethylene and carbon black particles having a primary particle size of 5 to 25 nm and a BET surface area of 200 to 250 $m^2$/g.

**2.** Membrane of claim 1, wherein the polytetrafluoroethylene is **characterized by** one or more of the parameters selected from:

- a bulk density of 350 to 400 g/L;
- an average molecular weight of $1 \cdot 10^7$ to $1 \cdot 10^9$ g/mol;
- an average particle size $d_{50}$ of 10 to 30 $\mu$m;
- a first melting point of 340 to 350 °C; and

subsequent melting points from 320 to 330 °C.

**3.** Membrane of claim 1 or 2, wherein the carbon black particles are further **characterized by** one or more of the parameters selected from:

- a primary particle size of 5 to 25 nm;
- a BET surface area of 200 to 250 $m^2$/g;
- a volatile content of less than 2.0%;
- a content of extractable matter in the toluene extract, 8 hours, of 0.5% or less;
- a basic pH of 8 or more;
- a Tint Strength IRB = 100% from 125 to 145%;
- OAN from 95 to 115 ml/100g; and

a black number My, determined on powder carbon black, from 250 to 280.

**4.** Membrane according to any one of the preceding claims, comprising a polymeric material comprising from 90 to 99% polytetrafluoroethylene and from 1 to 10% carbon black particles.

**5.** Membrane according to one of the preceding claims, wherein the polymer material is porous with pores having a pore size of 1 to 15 $\mu$m.

**6.** Membrane according to any one of the preceding claims, wherein the polymer material is porous with a porosity of 10 to 65%.

**7.** Membrane according to any one of claims 1 to 6, wherein the membrane comprises a film having a thickness of 0.1 to 5.0 mm.

**8.** Membrane according to any one of claims 1 to 7, wherein the membrane has an air flow of 0.5 to 300.0 Nl/h•$cm^2$ and a water retention of 0.1 to 2.0 bar.

9. Membrane according to any one of claims 1 to 8, obtainable by a process comprising the following steps:

(a) mixing polytetrafluoroethylene and carbon black particles, wherein polytetrafluoroethylene and carbon black particles are characterized as in the previous claims;
(b) sintering the mixture at 320 to 350 °C for 30 to 210 minutes;
(c) grinding the sintered product to a particle size of 200 $\mu$m or less;
(d) isostatic molding of the ground powder;
(e) sintering the compact at 360 to 380 °C for 4 to 10 hours; and
(f) mechanical finishing.

10. Membrane according to claim 9, wherein the sintering step (e) of the compact comprises the steps of:

(e1) heating from room temperature to 300 °C in 5 hours,
(e2) heating from 300 °C to 335 °C in 3 hours,
(e3) holding at 335 °C for 2 hours,
(e4) heating from 335 °C to 365 °C in 3 hours,
(e5) holding at 365 °C for 5 hours,
(e6) cooling from 365 °C to 335 °C in 3 hours,
(e7) holding at 335 °C for 3 hours,
(e8) cooling from 335 °C to 300 °C in 5 hours, and
(e9) cooling from 300 °C to room temperature in 3 hours.

11. Membrane according to any one of claims 9 to 10, wherein the step of mechanical finishing (f) comprises peeling a film having a thickness of 0.1 to 5.0 mm from the sintered compact.

12. Pressure compensation element comprising a membrane according to any one of claims 1 to 11.

13. Pressure compensation element according to claim 12, further comprising a housing which receives a membrane according to one of claims 1 to 11.

14. Method for the production of a membrane, the method of production comprising the steps of:

(a) mixing polytetrafluoroethylene and carbon black particles, wherein polytetrafluoroethylene and carbon black particles are characterized as in the previous claims;
(b) sintering the mixture at 320 to 350 °C for 30 to 210 minutes;
(c) grinding the sintered product to a particle size of 200 $\mu$m or less;
(d) isostatic molding of the ground powder;
(e) sintering the compact at 360 to 380 °C for 4 to 10 hours; and
(f) mechanical finishing.

15. Method according to claim 14, wherein the sintering step (e) of the compact comprises the steps of:

(e1) heating from room temperature to 300 °C in 5 hours,
(e2) heating from 300 °C to 335 °C in 3 hours,
(e3) holding at 335 °C for 2 hours,
(e4) heating from 335 °C to 365 °C in 3 hours,
(e5) holding at 365 °C for 5 hours,
(e6) cooling from 365 °C to 335 °C in 3 hours,
(e7) holding at 335 °C for 3 hours,
(e8) cooling from 335 °C to 300 °C in 5 hours, and
(e9) cooling from 300 °C to room temperature in 3 hours.

16. Use of a membrane according to one of claims 1 to 11 as an integral part of a pressure compensation element.

**Revendications**

1. Membrane comprenant un matériau polymère comprenant du polytétrafluoroéthylène et des particules de noir de carbone ayant une taille de particule primaire de 5 à 25 nm et une surface spécifique BET de 200 à 250 m$^2$/g.

2. Membrane selon la revendication 1, dans laquelle le polytétrafluoroéthylène est **caractérisé par** un ou plusieurs des paramètres choisis parmi:

- une densité apparente de 350 à 400 g/L;
- un poids moléculaire moyen de 1•10$^7$ à 1•10$^9$ g/mol;
- une taille de particules moyenne dso de 10 à 30 $\mu$m;
- un premier point de fusion de 340 à 350 °C; et

points de fusion ultérieurs de 320 à 330 °C.

3. Membrane selon la revendication 1 ou 2, dans laquelle les particules de noir de carbone sont en outre **caractérisées par** un ou plusieurs des paramètres choisis parmi:

- une taille de particule primaire de 5 à 25 nm;
- une surface BET de 200 à 250 m$^2$/g;
- une teneur en matières volatiles inférieure à 2,0%;
- une teneur en matières extractibles dans l'extrait de toluène pendant 8 heures de 0,5% ou moins;
- un pH basique de 8 ou plus;
- une résistance à la teinte (tint strength) IRB = 100% de 125 à 145%;
- OAN de 95 à 115 ml/100g; et

un nombre noir My, déterminé sur le noir de carbone en poudre, de 250 à 280.

4. Membrane selon l'une quelconque des revendications précédentes, comprenant un matériau polymère comprenant de 90 à 99% de polytétrafluoroéthylène et de 1 à 10% de particules de noir de carbone.

5. Membrane selon l'une des revendications précédentes, dans laquelle le matériau polymère est poreux avec des pores ayant une taille de pores de 1 à 15 $\mu$m.

6. Membrane selon l'une quelconque des revendications précédentes, dans laquelle le matériau polymère est poreux avec une porosité de 10 à 65%.

7. Membrane selon l'une quelconque des revendications 1 à 6, dans laquelle la membrane comprend un film ayant une épaisseur de 0,1 à 5,0 mm.

8. Membrane selon l'une quelconque des revendications 1 à 7, dans laquelle la membrane a un débit d'air de 0,5 à 300,0 Nl/h•cm$^2$ et une rétention d'eau de 0,1 à 2,0 bars.

9. Membrane selon l'une quelconque des revendications 1 à 8, susceptible d'être obtenue par un procédé comprenant les étapes suivantes:

(a) mélanger de polytétrafluoroéthylène et des particules de noir de carbone, le polytétrafluoroéthylène et les particules de noir de carbone étant caractérisées comme dans les revendications précédentes;
(b) fritter le mélange entre 320 et 350 °C pendant 30 à 210 minutes;
(c) broyage du produit fritté jusqu'à une taille de particule de 200 $\mu$m ou moins;
d) moulage isostatique de la poudre broyée;
(e) fritter le comprimé à une température de 360 à 380 °C pendant 4 à 10 heures; et
(f) finition mécanique.

10. Membrane selon la revendication 9, dans laquelle l'étape de frittage (e) du comprimé comprend les étapes de:

(e1) chauffage de la température ambiante à 300 °C en 5 heures,
(e2) chauffage de 300 °C à 335 °C en 3 heures,
(e3) maintenir à 335 °C pendant 2 heures,
(e4) chauffage de 335 °C à 365 °C en 3 heures,
(e5) maintenir à 365 °C pendant 5 heures.

(e6) refroidissement de 365 °C à 335 °C en 3 heures,
(e7) maintenir à 335 °C pendant 3 heures.
(e8) refroidissement de 335 °C à 300 °C en 5 heures, et
(e9) refroidissement de 300 °C à la température ambiante en 3 heures.

11. Membrane selon l'une quelconque des revendications 9 à 10, dans laquelle l'étape de finition mécanique (f) comprend le pelage d'un film ayant une épaisseur de 0,1 à 5,0 mm du comprimé fritté.

12. Elément de compensation de pression comprenant une membrane selon l'une quelconque des revendications 1 à 11.

13. Elément de compensation de pression selon la revendication 12, comprenant en outre un logement qui reçoit une membrane selon l'une des revendications 1 à 11.

14. Procédé de fabrication d'une membrane, le procédé de fabrication comprenant les étapes de:

(a) mélanger de polytétrafluoroéthylène et des particules de noir de carbone, le polytétrafluoroéthylène et les particules de noir de carbone étant caractérisées comme dans les revendications précédentes;
(b) fritter le mélange entre 320 et 350 °C pendant 30 à 210 minutes;
(c) broyage du produit fritté jusqu'à une taille de particule de 200 $\mu$m ou moins;
d) moulage isostatique de la poudre broyée;
(e) fritter le comprimé à une température de 360 à 380 °C pendant 4 à 10 heures; et
(f) finition mécanique.

15. Procédé selon la revendication 14, dans lequel l'étape de frittage (e) du comprimé comprend les étapes de:

(e1) chauffage de la température ambiante à 300 °C en 5 heures,
(e2) chauffage de 300 °C à 335 °C en 3 heures,
(e3) maintenir à 335 °C pendant 2 heures,
(e4) chauffage de 335 °C à 365 °C en 3 heures,
(e5) maintenir à 365 °C pendant 5 heures.
(e6) refroidissement de 365 °C à 335 °C en 3 heures,
(e7) maintenir à 335 °C pendant 3 heures.
(e8) refroidissement de 335 °C à 300 °C en 5 heures, et
(e9) refroidissement de 300 °C à la température ambiante en 3 heures.

16. Utilisation d'une membrane selon l'une des revendications 1 à 11 en tant que partie intégrante d'un élément de compensation de pression.

**Figur 1**

Figur 1

PTFE Granulat

Mischen mit Ruß

Ansintern mit speziellem Sinterprogramm

angesintertes Pulver in agglomerierter Form

Mahlen und Sieben auf gewünschte Korngröße

Granulat für Fertigung poröser Teile

Einfüllen in Gummipressform zum isostatischen Verpressen

Isostatisches Verpressen

„Grünling" in Rondenform, Plattenform, etc.

Sintern mit entspr. Sinterprogramm

Rohling (Ronde, Platte, etc.)

Schälen

Drehen, Fräsen, etc. (zerspanende Verarbeitung)

Schälfolie

Stanzen

Fertige Druckausgleichsmembran oder Druckausgleichsteil, evtl. Einbau in Clip- oder Schraubelement

Figur 2

isostatisches Pressen

**IN DER BESCHREIBUNG AUFGEFÜHRTE DOKUMENTE**

**In der Beschreibung aufgeführte Patentdokumente**

- WO 9010673 A1
- WO 9628501 A1
- WO 9706206 A1
- DE 102006053113 A1
- EP 0377067 A1
- WO 9616288 A1
- EP 2404652 A1
- US 2752637 A
- US 6355391 B
- US 20100104845 A
- US 20040175571 A
- WO 2004016341 A